# EUROPÄISCHE PATENTSCHRIFT

(11) **EP 1 664 715 B1**
(45) Veröffentlichungstag und Bekanntmachung des Hinweises auf die Patenterteilung: **21.04.2010**
(21) Anmeldenummer: 04764815.9
(22) Anmeldetag: 03.09.2004
(51) Int. Cl.: G01L 27/00

(54) **DRUCKMESSUMFORMER MIT PIEZOELEKTRISCHEM ELEMENT ZUR ERKENNUNG VON TRENNMEMBRANFEHLERN**
PRESSURE TRANSDUCER PROVIDED WITH A PIEZOELECTRIC ELEMENT FOR THE DETECTION OF ERRORS IN SEPARATION MEMBRANES
TRANSDUCTEUR DE PRESSION POURVU D'UN ELEMENT PIEZO-ELECTRIQUE POUR LA DETECTION DE DEFAUTS DANS DES MEMBRANES DE SEPARATION

(30) Priorität: 12.09.2003 DE 10342368
(43) Veröffentlichungstag der Anmeldung: 07.06.2006
(73) Patentinhaber: SIEMENS AKTIENGESELLSCHAFT, 80333 München (DE)
(72) Erfinder: KUMPFMÜLLER, Hans-Georg, 76889 Gleiszellen-Gleishorbach (DE)
(86) Internationale Anmeldenummer: PCT/EP2004/009863
(87) Internationale Veröffentlichungsnummer: WO 2005/026682

(56) Entgegenhaltungen:
- DE-A- 3 705 900
- JP-A- 6 307 962
- US-A- 5 114 664
- US-A- 5 760 310

## Beschreibung

Die Erfindung betrifft einen Druckmessumformer, wie bekannt aus US-A-5 114 664, mit einem in einem Gehäuse angeordneten Drucksensor zur Wandlung eines zu messenden Drucks in ein Messsignal nach dem Oberbegriff des Anspruchs 1.

Ein derartiger Druckmessumformer, mit welchem ein Absolutdruck eines Prozessmediums oder eine Druckdifferenz gemessen werden kann, ist aus der DE 37 05 901 C2 bekannt. Dort ist eine Druckmesszelle mit einem Gehäuse offenbart, in welchem eine Messmembran angeordnet ist, die einen Gehäuseinnenraum in eine Messkammer und eine Referenzkammer unterteilt. Die Messkammer und die Referenzkammer sind jeweils mit einem Druckkanal versehen, der bei einem Einsatz der Druckmesszelle in einem Differenzdruckmessumformer zu jeweils einer Trennmembran führt, welche die Messkammer bzw. die Referenzkammer von einem Messmedium trennt, an welchem die Druckdifferenz zwischen verschiedenen Messpunkten gemessen werden soll. Die beiden Kammern sind mit einer Druckübertragungsflüssigkeit, beispielsweise einem Silikonöl, gefüllt. Zur Erzeugung eines elektrischen Messsignals, das sich in Abhängigkeit der anliegenden Druckdifferenz ändert, kann die Messmembran einen Drucksensor tragen, der beispielsweise aus Silizium ausgeführt und mit Dehnungswiderständen versehen ist. Durch eine Einrichtung zur Auswertung des Messsignals kann aus dem elektrischen Messsignal ein Messwert erzeugt und ausgegeben werden. In der Referenzkammer ist gegenüber der Messmembran ein Piezoelement angeordnet, das zur Ansteuerung mit elektrischen Anschlüssen versehen ist. Dieses Piezoelement dient bei Anregung zur Modulation des hydrostatischen Drucks in der Druckübertragungsflüssigkeit der Referenzkammer. Damit sich diese hydrostatische Druckerhöhung in der Referenzkammer einstellt, werden schnelle Modulationsvorgänge angewandt. Der Druckausgleich über die an den Druckkanal anschließende Trennmembran ist dann vernachlässigbar. Die Druckänderung wird durch die Druckübertragungsflüssigkeit zur Messmembran übertragen. Bei bekannter Amplitude der Druckmodulation wird aus der Amplitude der entsprechenden Modulation des Messsignals direkt auf die Empfindlichkeit der Druckmesszelle geschlossen. Es wird somit eine Selbstüberwachung der Druckmesszelle auf Fehlfunktionen insbesondere der Messmembran während des Betriebs und ohne Unterbrechung des Messprozesses ermöglicht. Der bekannte Druckmessumformer hat jedoch den Nachteil, dass Veränderungen oder Schäden an der Trennmembran nicht erkannt werden können.

Beim Einsatz von Druckmessumformern in prozesstechnischen Anlagen kann es vorkommen, dass eine Trennmembran durch das Messmedium chemisch angegriffen oder mechanisch beschädigt wird. Wenn ein Loch in der Membran entsteht, tritt das Messmedium in die Messkammer oder die Referenzkammer ein und gelangt zum Drucksensor, der empfindlich auf das Messmedium reagiert. Bevor ein Totalausfall auftritt, kann es während einer Übergangszeit zu fehlerhaften Messwerten kommen, die der Anwender nicht bemerkt. Dies kann in einer prozesstechnischen Anlage schwerwiegende Folgen haben. Weiterhin kann es durch das Messmedium zu Ablagerungen auf einer Trennmembran kommen, welche die Druckübertragung zum Sensor behindern. Dadurch entstehen Fehlmessungen, die durch den Anwender schwer feststellbar sind. Lediglich durch eine optische Inspektion, die einen vorherigen Ausbau des Druckmessumformers erfordert, sind derartige Fehler erkennbar.

Der Erfindung liegt die Aufgabe zugrunde, einen Druckmessumformer zu schaffen, der eine Überwachung des Zustands einer Trennmembran bereits ohne Ausbau des Druckmessumformers ermöglicht.

Zur Lösung dieser Aufgabe weist der neue Druckmessumformer der eingangs genannten Art die im kennzeichnenden Teil des Anspruchs 1 angegebenen Merkmale auf. In den Unteransprüchen sind vorteilhafte Weiterbildungen der Erfindung beschrieben.

Die Erfindung hat den Vorteil, dass eine zuverlässige Aussage über den Zustand einer Trennmembran gewonnen werden kann, ohne dass der Druckmessumformer vorher beispielsweise aus einer Rohrleitung ausgebaut werden muss. Damit kann die Diagnose quasi während des Betriebs des Druckmessumformers erfolgen. Zudem ist ein Alterungsprozess der Trennmembran erkennbar und es kann rechtzeitig darauf reagiert werden, bevor ein Ausfall des Druckmessumformers droht und es möglicherweise zu einem Stillstand der prozesstechnischen Anlage kommt, in welcher der Druckmessumformer betrieben wird. Ein weiterer Vorteil ist darin zu sehen, dass der durch einen erfindungsgemäßen Druckmessumformer gelieferte Messwert zuverlässiger wird, da Veränderungen der Trennmembran, beispielsweise Ablagerungen oder Materialabtragungen durch Korrosion oder Abrasion, die den Messwert verfälschen könnten, beim neuen Druckmessumformer durch Diagnose automatisch erkannt und gemeldet werden können. Zudem hat der neue Druckmessumformer den Vorteil, dass eine eventuelle optische Inspektion, die bei bestimmten Messmedien bisher erforderlich war, entfällt und somit die Überwachung des Zustands einer Trennmembran mit wesentlich geringerem Aufwand verbunden ist.

Ein Loch in einer Trennmembran kann besonders zuverlässig diagnostiziert werden, wenn der Wert des Messsignals, der sich um eine vorgebbare Wartezeit nach Beginn einer im Wesentlichen sprunghaften Volumenänderung der Messkammer einstellt, als Kenngröße des sich einstellenden Verlaufs des Messsignals mit einer entsprechenden Kenngröße des Referenzverlaufs verglichen wird und ein Signal zur Anzeige eines Lochs in der Trennmembran ausgegeben wird, wenn die entsprechende Kenngröße des Referenzverlaufs um mehr als ein vorgebbares Maß unterschritten wird. Dabei wird ausgenutzt, dass aufgrund einer Leckage in der Trennmembran eine durch Volumenänderung hervorgerufene Druckänderung nach einer gewissen Wartezeit verschwindet.

Zur zuverlässigen Diagnose von Ablagerungen auf der Trennmembran kann vorteilhaft der sich nach einer im Wesentlichen sprunghaften Volumenänderung ergebende Maximalwert des Messsignals als Kenngröße des sich einstellenden Verlaufs des Messsignals mit einer entsprechenden Kenngröße des Referenzverlaufs verglichen werden und ein Signal zur Anzeige von Ablagerungen auf der Trennmembran ausgegeben werden, wenn die entsprechende Kenngröße des Referenzverlaufs um mehr als ein vorgebbares Maß überschritten wird. In analoger Weise kann vorteilhaft eine Materialabtragung der Trennmembran diagnostiziert werden, indem überwacht wird, ob die entsprechende Kenngröße des Referenzverlaufs um mehr als ein vorgebbares Maß unterschritten wird.

In vorteilhafter Weise ist eine präventive Wartung eines Druckmessumformers vor einem bevorstehenden Ausfall möglich, wenn durch die Auswerteeinrichtung anhand von zeitlichen Veränderungen einer Kenngröße des sich einstellenden Verlaufs des Messsignals bei zeitlich beabstandeten, beispielsweise zyklisch durchgeführten Diagnosevorgängen eine Trendaussage ermittelt und ausgegeben wird, anhand welcher Wartungspersonal abschätzen kann, wann mit einem bevorstehenden Ausfall zu rechnen ist.

Ein piezoelektrisches Element zur Volumenänderung der Messkammer vorzusehen, das durch die Auswerteeinrichtung ansteuerbar ist, hat den Vorteil, dass für die Volumenänderung eine geringe Leistung erforderlich ist und die Mittel dazu aufwandsarm realisierbar sind.

Die zur Überwachung einer Trennmembran erforderlichen Funktionen einer Auswerteeinrichtung können ebenfalls ohne größeren Aufwand durch geeignete Ausgestaltung eines Betriebsprogramms einer Recheneinheit realisiert werden, wenn eine Auswerteeinheit auf der Basis eines Mikroprozessors verwendet wird. Die Herstellungskosten des Druckmessumformers werden somit vorteilhaft durch das neue Diagnoseverfahren kaum beeinflusst.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: eine Prinzipdarstellung eines Druckmessumformers für Absolutdruck und
- Figur 2: ein Zeitdiagramm mit qualitativen Signalverläufen.

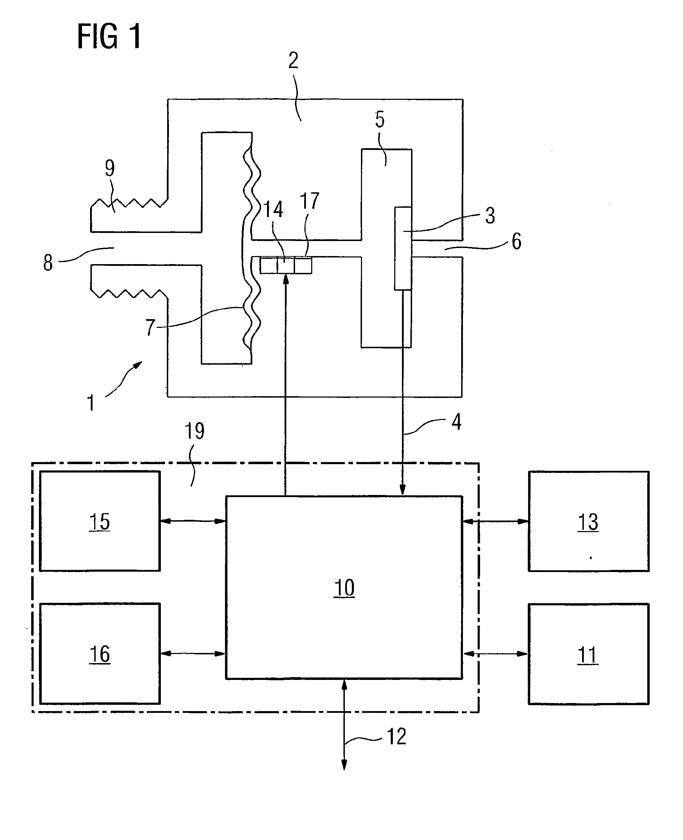

In Figur 1 ist ein Blockschaltbild eines Druckmessumformers dargestellt. Der Druckmessumformer weist eine im Wesentlichen rotationssymmetrische Druckmesszelle 1 mit einem Gehäuse 2 auf, in dem ein Drucksensor 3 zur Wandlung eines zu messenden Drucks in ein elektrisches Messsignal 4 angeordnet ist. Der Drucksensor 3 befindet sich zwischen einer Messkammer 5 und einem Kanal 6, der zur Zuführung eines Referenzdruckes dient. Die Messkammer 5 ist mit einem Silikonöl als Druckübertragungsflüssigkeit gefüllt. Durch den Kanal 6 wird Luft mit dem jeweils aktuellen Umgebungsdruck auf den Drucksensor 3 geleitet. Das Messsignal 4 gibt somit bei dem gezeigten Ausführungsbeispiel den auf Umgebungsdruck bezogenen Absolutdruck wieder. Zum Schutz des Sensors ist die Druckübertragungsflüssigkeit in der Messkammer 5 durch eine Trennmembran 7 von einem Prozessmedium 8 getrennt, welches durch einen Kanal mit dem zu messenden Druck in die Druckmesszelle 1 eingeleitet wird. Durch die Trennmembran 7 ist der Drucksensor 3 vor einer Beschädigung durch aggressive Medien geschützt. Ein Gewindezapfen 9 dient zum leichten Einbau der Druckmesszelle 1 in eine Rohrleitung einer prozesstechnischen Anlage, die der Übersichtlichkeit wegen in der Zeichnung nicht dargestellt ist. Das Messsignal 4 wird einem Mikroprozessor 10 zugeführt, der das Signal 4 zur Erzeugung eines Messwerts auswertet, den Messwert auf einer Anzeige 11 ausgibt und zur weiteren Verarbeitung über einen Feldbus 12 an eine Leitstation der prozesstechnischen Anlage übermittelt, die wiederum zur besseren Übersichtlichkeit in der Figur nicht dargestellt ist. Zur Durchführung der Messungen und der Kommunikation ist der Mikroprozessor 10 mit einem geeigneten Betriebsprogramm versehen. Über eine Tastatur 13 können Eingaben eines Bedieners und über die Anzeige 11 Ausgaben an den Bediener erfolgen. Zur Diagnose der Trennmembran 7 ist durch den Mikroprozessor 10 ein piezoelektrisches Element 14, das sich an der Messkammer 5 der Druckmesszelle 1 befindet und von der Messkammer 5 durch eine Membran 17 getrennt ist, derart ansteuerbar, dass sich das Volumen der Messkammer 5 entsprechend einem im Wesentlichen vorbestimmten zeitlichen Verlauf verändert. Im physikalischen Sinne wird durch das piezoelektrische Element 14 nicht die Größe des Volumens der Messkammer 5 verändert, sondern lediglich das in der Messkammer 5 befindliche Volumen verschoben, so dass die Trennmembran 7 durch die Volumenverschiebung eine Lageänderung erfährt. Es ändert sich somit die Lage der Druckübertragungsflüssigkeit in der Druckmesszelle. Ein Speicher 15 dient zur Abspeicherung eines Verlaufs des Messsignals 4, der sich bei intakter Trennmembran 7 als Reaktion auf die Volumenänderung einstellt. Dieser Verlauf wird bei der erstmaligen Inbetriebnahme des Sensors in der prozesstechnischen Anlage aufgezeichnet. In einem Speicher 16 werden Verläufe des Messsignals 4 hinterlegt, welche sich im späteren Betrieb des Messumformers als Reaktion auf eine Volumenänderung einstellen, die zur Durchführung einer Diagnose erzeugt wird. Der Mikroprozessor 10 ermittelt aus den in den Speichern 15 und 16 hinterlegten Verläufen einander entsprechende Kenngrößen, vergleicht diese miteinander und leitet aus dem Vergleichsergebnis verschiedene Aussagen über den Zustand der Trennmembran 7 ab. Im Falle eines Fehlers wird auf der Anzeige 11 oder über den Feldbus 12 ein Signal zur Anzeige des Fehlers ausgegeben, damit durch das Bedien- oder Wartungspersonal geeignete Maßnahmen zur Fehlerbehandlung eingeleitet werden können. Mikroprozessor 10, Speicher 15 und Speicher 16 bilden somit Bestandteile einer Einrichtung 19 zur Auswertung des Messsignals 4.

Alternativ zum beschriebenen Ausführungsbeispiel ist es selbstverständlich möglich, in den Speichern 15 und/oder 16 anstelle der vollständigen Messsignalverläufe lediglich die zur Diagnose ermittelten Kenngrößen zu hinterlegen.

Die Erfindung wird zwar hier anhand eines Ausführungsbeispiels mit einer Druckmesszelle für Absolutdruck erläutert, ist aber in analoger Weise bei einer Messzelle für Differenzdruck anwendbar.

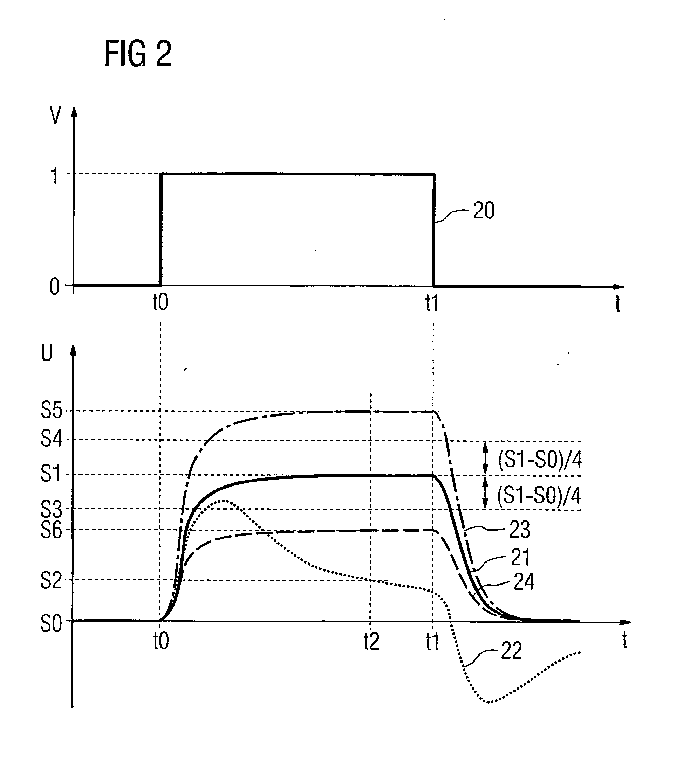

Anhand der in Figur 2 dargestellten Signalverläufe wird im Folgenden das Funktionsprinzip der Diagnose näher erläutert. In den Diagrammen gemäß Figur 2 sind die qualitativen Signalverläufe dargestellt mit der Zeit t auf der Abszisse und der jeweiligen Signalamplitude V bzw. U auf den Ordinaten. Da sich der Zustand der Trennmembran 7 (Figur 1) nur allmählich ändert, genügt eine zyklische Durchführung der Diagnose. Zur Erzeugung einer Volumenänderung der Messkammer 5 (Figur 1) entsprechend einem dargestellten Verlauf 20 wird das piezoelektrische Element 14 (Figur 1) mit einem Rechteckimpuls angesteuert, der zum Zeitpunkt t0 beginnt und zum Zeitpunkt t1 endet. Als Reaktion auf diese Volumenänderung stellt sich mit intakter Trennmembran 7 (Figur 1) ein Verlauf 21 des Messsignals 4 (Figur 1) ein. Zum Zeitpunkt t0 beginnt das Messsignal, sich von seinem Anfangswert S0 zu entfernen und nähert sich allmählich einem neuen Endwert S1. Ursache dafür ist die Änderung des Volumens unter der Trennmembran 7 (Figur 1) und die damit verbundene Änderung der Lage der Trennmembran. Diese Lageverschiebung führt aufgrund der Elastizität der Trennmembran 7 zu einer Veränderung des Drucks in der Messkammer 5 und einer entsprechenden Veränderung des Messsignals 4. Die Erfindung beruht auf der Erkenntnis, dass sich das Verhalten der Trennmembran bei Volumenänderungen in der Messkammer ändert, wenn in der Trennmembran eine Leckstelle entsteht, sich auf der Trennmembran Ablagerungen bilden und/oder wenn die Dicke der Trennmembran durch Abrasion oder chemische Reaktion mit dem Messmedium abnimmt. Der Verlauf 21 wird als Referenzverlauf zum Vergleich mit späteren Messsignalverläufen herangezogen, die bei einer Volumenänderung mit im Wesentlichen demselben zeitlichen Verlauf 20 aufgenommen werden. Weicht ein später während des Betriebs aufgenommener Messsignalverlauf stark vom Referenzverlauf 21 ab, so lässt dies auf einen fehlerhaften Zustand der Membran schließen.

Bei einem Loch in der Trennmembran wird sich als Reaktion auf eine sprungförmige Volumenänderung ein Verlauf 22 des Messsignals einstellen. Kurz nach dem Zeitpunkt t0 gleicht der Verlauf 22 noch dem Referenzverlauf 21. Das Messsignal strebt jedoch wieder vorzeitig auf den Anfangswert S0 zu, da durch das Leck in der Membran Druckübertragungsflüssigkeit zum Prozessmedium fließen kann und somit ein Druckausgleich stattfindet. Ein Leck in der Trennmembran kann somit sicher detektiert werden, wenn zu einem späteren Zeitpunkt, im gezeigten Ausführungsbeispiel zum Zeitpunkt t2, der um eine vorgegebene Wartezeit nach dem Zeitpunkt t0 liegt, ein Wert S2 des sich einstellenden Verlaufs 22 des Messsignals ermittelt und mit dem Wert S1, den der Referenzverlauf 21 zu einem entsprechenden Zeitpunkt angenommen hatte, verglichen wird und ein Leck erkannt und gemeldet wird, wenn der Wert S2 um mehr als ein vorgegebenes Maß, im gezeigten Beispiel um mehr als 25 % des Abstands zwischen den Werten S1 und S0, abweicht. Der Wert S2 des Verlaufs 22 liegt deutlich unter einem so berechneten Schwellwert S3, so dass ein Leck in der Membran sicher erkannt wird.

Bei Ablagerungen auf der Trennmembran 7 (Figur 1) verringert sich deren Elastizität. Eine Volumenänderung der Messkammer 5 führt somit zu einer stärkeren Veränderung des Drucks und einer entsprechend stärkeren Veränderung des Messsignals 4 (Figur 1) als bei der Referenzmessung, wie es in Figur 2 durch einen Verlauf 23 qualitativ dargestellt ist. Zur Feststellung eines derartigen Fehlers der Trennmembran wird vorteilhaft als Kenngröße des Verlaufs 23 dessen Maximalwert S5 mit dem Maximalwert S1 des Verlaufs 21 als Referenzkenngröße verglichen und ein Fehler erkannt und ausgegeben, wenn die beiden Werte um mehr als ein Viertel des Abstands zwischen den Werten S1 und S0 voneinander abweichen, d. h., wenn der Maximalwert S5 einen Schwellwert S4 überschreitet.

Andererseits wird die Elastizität der Trennmembran bei einer Materialabtragung, beispielsweise durch Abrasion oder chemische Reaktion, vergrößert und die Trennmembran kann leichter einer Volumenänderung der Messkammer folgen. In Figur 2 ist ein Verlauf 24, der sich bei einer Messmembran einstellt, wenn die Wandstärke der Membran bereits erheblich durch Materialabtragungen reduziert ist, qualitativ dargestellt. Analog zur Detektion von Ablagerungen auf der Trennmembran kann somit auch bei Materialabtragungen durch einfachen Vergleich eines Maximalwerts S6 des Verlaufs 24 mit einem Schwellwert S3, der um ein vorgegebenes Maß, hier ein Viertel der Differenz zwischen den Werten S1 und S0, unter dem Maximalwert S1 des Verlaufs 21 liegt, eine unzulässig starke Materialabtragung erkannt und als Fehler angezeigt werden.

Da sich derartige Veränderungen an der Trennmembran über einen längeren Zeitraum ergeben, ist es bei einer zyklischen Durchführung der beschriebenen Diagnose in einfacher Weise möglich, anhand der zeitlichen Änderung der Kenngrößen, beispielsweise der Maximalwerte der sich einstellenden Verläufe des Messsignals, eine Trendaussage abzuleiten und auszugeben. Beispielsweise kann eine Trendaussage angeben, zu welchem Zeitpunkt Ablagerungen ein gerade noch vertretbares Maß übersteigen werden. Damit ist eine vorbeugende Wartung des Druckmessumformers möglich und es können zusätzliche Kosten, mit denen ein unerwarteter Fehler und dessen Beseitigung verbunden wären, vermieden werden.

Eine Volumenänderung entsprechend dem Verlauf 20 in Figur 2 hat sich als besonders vorteilhaft erwiesen. Selbstverständlich kann die Diagnose auch mit andersartigen Verläufen durchgeführt werden und es können vom gezeigten Ausführungsbeispiel abweichende Kenngrößen der Verläufe des sich daraufhin einstellenden Messsignals zur Fehlererkennung ausgewertet werden.

## Patentansprüche

1. Druckmessumformer
- mit einem in einem Gehäuse (2) angeordneten Drucksensor (3) zur Wandlung eines zu messenden Drucks in ein elektrisches Messsignal (4),
- mit einer Messkammer (5), die durch eine Trennmembran (7) von einem zu messenden Medium (8) getrennt und zur Weiterleitung des Drucks zum Drucksensor (3) mit einer Druckübertragungsflüssigkeit gefüllt ist, und
- mit einer Einrichtung (19) zur Auswertung des Messsignals, die derart ausgebildet ist, dass zumindest eine Kenngröße (S5) eines sich als Reaktion auf eine Volumenänderung einstellenden Verlaufs (23) des Messsignals (4) mit einer entsprechenden Kenngröße (S1) eines Referenzverlaufs (21) vergleichbar ist und dass in Abhängigkeit von Abweichungen zwischen den beiden Kenngrößen ein Signal zur Anzeige eines Fehlers der Trennmembran ausgebbar ist,
**dadurch gekennzeichnet,**
- **dass** die Messkammer (5) mit einem piezoelektrischen Element (14) versehen ist, das derart ansteuerbar ist, dass sich das Volumen der Messkammer (5) entsprechend einem im Wesentlichen vorbestimmten zeitlichen Verlauf (20) verändert.

2. Druckmessumformer nach Anspruch 1, **dadurch gekennzeichnet, dass** durch die Auswerteeinrichtung (19) ein Signal zur Anzeige eines Lecks in der Trennmembran (7) ausgebbar ist, wenn der Wert (S2) des Messsignals (4) um eine vorgebbare Wartezeit nach Beginn einer im Wesentlichen sprunghaften Volumenänderung als Kenngröße des sich einstellenden Verlaufs (22) des Messsignals (4) eine entsprechende Kenngröße (S1) des Referenzverlaufs (21) um mehr als ein vorgebbares Maß unterschreitet.

3. Druckmessumformer nach Anspruch 1 oder 2, **dadurch gekennzeichnet, dass** durch die Auswerteeinrichtung (19) ein Signal zur Anzeige von Ablagerungen auf der Trennmembran (7) ausgebbar ist, wenn der Maximalwert (S5) des Messsignals als Kenngröße des sich einstellenden Verlaufs (23) des Messsignals nach einer im Wesentlichen sprunghaften Volumenänderung eine entsprechende Kenngröße (S1) des Referenzverlaufs (21) um mehr als ein vorgebbares Maß überschreitet.

4. Druckmessumformer nach einem der vorhergehenden Ansprüche, **dadurch gekennzeichnet, dass** durch die Auswerteeinrichtung (19) ein Signal zur Anzeige einer Materialabtragung auf der Trennmembran (7) ausgebbar ist, wenn der Maximalwert (S6) des Messsignals als Kenngröße des sich einstellenden Verlaufs (24) des Messsignals nach einer im Wesentlichen sprunghaften Volumenänderung eine entsprechende Kenngröße (S1) des Referenzverlaufs (21) um mehr als ein vorgebbares Maß unterschreitet.

5. Druckmessumformer nach einem der vorhergehenden Ansprüche, **dadurch gekennzeichnet, dass** durch die Auswerteeinrichtung (19) anhand von zeitlichen Veränderungen einer Kenngröße des sich einstellenden Verlaufs des Messsignals bei zeitlich beabstandeten Diagnosevorgängen eine Trendaussage ausgebbar ist.

## Claims

1. Pressure transducer
- having a pressure sensor (3) located in a housing (2) for converting a pressure to be measured into an electrical measuring signal (4),
- having a measuring chamber (5) which is separated by means of a separation membrane (7) from a medium to be measured (8) and is filled with a pressure transfer fluid in order to transmit the pressure to the pressure sensor (3), and
- having a facility (19) for evaluating the measuring signal which is implemented in such a manner that at least one characteristic value (S5) for a path (23) presenting itself for the measuring signal (4) in response to a change in volume can be compared with a corresponding characteristic value (S1) for a reference path (21), and that a signal indicating an error in the separation membrane can be output as a function of differences between the two characteristic values,
**characterised in that**
- the measuring chamber (5) is provided with a piezoelectric element (14) which can be controlled in such a manner that the volume of the measuring chamber (5) changes in accordance with an essentially predetermined timing path (20).

2. Pressure transducer according to claim 1, **characterised in that** through the evaluation unit (19) a signal indicating a leak in the separation membrane (7) can be output if the value (S2) for the measuring signal (4) as a characteristic value for the path (22) presenting itself for the measuring signal (4) does not reach a corresponding characteristic value (S1) for the reference path (21) by more than a predefinable extent within a predefinable delay period after the beginning of an essentially sudden change of volume.

3. Pressure transducer according to claim 1 or 2, **characterised in that** through the evaluation unit (19) a signal indicating deposits on the separation membrane (7) can be output if the maximum value (S5) for the measuring signal as a characteristic value for the path (23) presenting itself for the measuring signal exceeds a corresponding characteristic value (S1) for the reference path (21) by more than a predefinable extent after an essentially sudden change of volume.

4. Pressure transducer according to one of the preceding claims, **characterised in that** through the evaluation unit (19) a signal indicating material erosion on the separation membrane (7) can be output if the maximum value (S6) for the measuring signal as a characteristic value for the path (24) presenting itself for the measuring signal does not reach a corresponding characteristic value (S1) for the reference path (21) by more than a predefinable extent after an essentially sudden change of volume.

5. Pressure transducer according to one of the preceding claims, **characterised in that** through the evaluation unit (19) a trend statement can be output on the basis of timing changes in a characteristic value for the path presenting itself for the measuring signal in the case of temporally spaced diagnostic operations.

## Revendications

1. Transducteur de pression
- comprennant un capteur (3) de pression qui est diposé dans un boîtier (2) et qui est destiné à transformer une pression à mesurer en un signal (4) électrique de mesure,
- comprennant une chambre (5) de mesure qui est séparée d'un milieu (8) à mesurer par une membrane (7) de séparation et qui, pour acheminer la pression au capteur (3) de pression, est emplie d'un liquide transmission de la pression, et
- comprenant un dispositif (19) d'exploitation du signal de mesure qui est constitué de manière à ce que au moins une grandeur (S5) caractéristique d'un tracé (23) du signal (4) de mesure, s'établissant en réaction à une variation de volume, puisse être comparée à une grandeur (S5) caractéristique correspondante d'un tracé (21) de référence et en ce que, en fonction d'écarts entre les deux grandeurs caractéristiques, un signal d'indication d'un défaut de la membrane de séparation puisse être émis,
**caractérisé**
- **en ce que** la chambre (5) de mesure est pourvue d'un élément (14) piézoélectrique qui peut être commandé de manière à ce que le volume de la chambre (5) de mesure se modifie en fonction d'une courbe (20) dans le temps sensiblement déterminée à l'avance.

2. Transducteur de pression suivant la revendication 1, **caractérisé en ce que**, par le dispositif (19) d'exploitation, un signal d'indication d'une fuite dans la membrane (7) de séparation peut être émis, lorsque la valeur (S2) du signal (4) de mesure, pendant un temps d'attente pouvant être prescrit après le début d'une variation de volume sensiblement à saut, en tant que grandeur de mesure du tracé (22) s'établissant du signal (4) de mesure, devient inférieure à une grandeur (S5) caractéristique correspondante de plus d'une valeur pouvant être prescrite.

3. Transducteur de pression suivant la revendication 1 ou 2, **caractérisé en ce que**, par le dispositif (19) d'exploitation, un signal d'indication de dépôts sur la membrane (7) de séparation peut être émis, lorsque la valeur (S5) maximum du signal de mesure en tant que grandeur caractéristique du tracé (23) s'établissant du signal de mesure après une variation de volume sensiblement à saut, dépasse une grandeur (S1) caractéristique correspondante du tracé (21) de référence de plus d'une valeur pouvant être prescrite.

4. Transducteur de pression suivant l'une des revendications précédentes, **caractérisé en ce que**, par le dispositif (19) d'exploitation, un signal d'indication d'un enlèvement de matière sur la membrane (7) de séparation peut être émis, lorsque la valeur (S6) maximum du signal de mesure en tant que grandeur caractéristique du tracé (24) s'établissant du signal de mesure après une variation de volume sensiblement à saut, devient inférieure à une grandeur (S1) correspondante du tracé (21) de référence de plus d'une valeur pouvant être prescrite.

5. Transducteur de pression suivant l'une des revendications précédentes, **caractérisé en ce que**, par le dispositif (19) d'exploitation, une prédiction de tendance peut être émise au moyen de variations dans le temps d'une grandeur caractéristique du tracé s'établissant du signal de mesure pour des opérations de diagnostic à distance dans le temps.
